# EUROPÄISCHE PATENTSCHRIFT

(11) **EP 1 462 981 B1**
(45) Veröffentlichungstag und Bekanntmachung des Hinweises auf die Patenterteilung: **18.10.2006**
(21) Anmeldenummer: 03010260.2
(22) Anmeldetag: 07.05.2003
(51) Int. Cl.: G06K 7/00

(54) **Kartenleser mit Verriegelung**
card reader with locking mechanism
lecteur de carte avec méchanisme de verrouillage

(30) Priorität: 22.03.2003 EP 03006516
(43) Veröffentlichungstag der Anmeldung: 29.09.2004
(73) Patentinhaber: ddm hopt + schuler GmbH & Co. KG, D-78628 Rottweil (DE)
(72) Erfinder: Hopt, Jürgen, 78628 Rottweil (DE); Storz, Michael, 78073 Bad Dürrheim (DE); Rapp, Hans-Jochen, 78628 Rottweil (DE)
(74) Vertreter: Kohler Schmid Möbus

(56) Entgegenhaltungen:
- EP-A- 1 120 735
- DE-A- 3 518 247
- DE-A- 3 916 783
- DE-A- 19 520 537
- DE-A- 19 955 299
- DE-A- 19 955 300
- DE-C- 19 545 502
- DE-U- 20 017 507
- US-B2- 6 659 348

## Beschreibung

Die vorliegende Erfindung betrifft einen Kartenleser mit einem Schwenkarm zur Verriegelung einer eingeführten Karte entgegen der Karteneinführrichtung, wobei der Schwenkarm in seiner Verriegelungsstellung hinter dem in Karteneinführrichtung hinteren Kartenende in die Kartenbahn eingreift.

Ein derartiger Kartenleser ist beispielsweise durch DE 195 45 502 C1 oder DE 199 55 300 A1 bekannt geworden.

Bei bekannten Kartenlesern wird die eingeführte Karte im Kartenleser mittels eines Schwenkarms verriegelt, um z.B. während des Datenaustausches ein Zurückziehen der eingeführten Karte durch den Benutzer zu verhindern. Der Schwenkarm wird hinter der eingeführten Karte in die Kartenbahn geschwenkt und in dieser Verriegelungsstellung arretiert. Nach Lösen der motorangetriebenen Arretierung schwenkt der Schwenkarm aus der Kartenbahn heraus, und die Karte kann vom Benutzer entnommen werden. Wenn allerdings die Arretierung defekt ist, z.B. klemmt, oder bei Stromausfall wird die Arretierung nicht gelöst, so dass der Benutzer die Karte nicht aus dem Kartenleser herausziehen kann.

DE 195 45 502 C1 offenbart einen Kartenleser mit einem Verriegelungsmechanismus, der am Ende eines zweiarmigen Hebels vorgesehen ist. Dieser Hebel hintergreift eine vollständig eingelegte Karte. Der als Taste ausgebildete Entriegelungsmechanismus kann erst betätigt werden, wenn ein Magnet die Karte freigegeben hat.

DE 199 55 300 A1 beschreibt einen Kartenleser mit einem auf Hebeln basierenden Verriegelungsmechanismus, welcher eine verschiebbare Schubstange aufweist. Die Verriegelung kann nur durch Bestromen eines Elektromagneten gelöst werden, so dass die Karte bei Stromausfall im Kartenleser verbleibt.

Aufgabe der vorliegenden Erfindung ist es daher, einen Kartenleser der eingangs genannten Art dahingehend weiterzubilden, dass eine im Kartenleser verriegelte Karte auch bei einer Störung durch den Benutzer entnommen werden kann.

Diese Aufgabe wird erfindungsgemäß dadurch gelöst, dass der Schwenkarm entgegen der Karteneinführrichtung gegen die Wirkung einer Rückstellfeder verschiebbar ist und auf seinem Verschiebeweg eine Zwangsführung vorgesehen ist, die den Schwenkarm aus der Kartenbahn auslenkt.

Der erfindungsgemäße Kartenleser hat den Vorteil, dass durch Ziehen an der verriegelten Karte der Schwenkarm nach hinten, d.h. entgegen der Karteneinführrichtung, geschoben und durch die Zwangsführung der Schwenkarm aus der Kartenbahn herausgeschwenkt wird. Durch die Zwangsführung wird der Schwenkarm automatisch geöffnet und gibt die Karte frei. Über die Rückstellfeder kann die zum Öffnen der Verriegelung erforderliche Zugkraft eingestellt werden.

Vorzugsweise ist die Schwenkachse des Schwenkarms entweder in einem z.B. ca. 3 mm langen Langloch verschiebbar gelagert oder in einem Gleitstück drehbar gelagert, welches im Kartenleser entgegen der Karteneinführrichtung verschiebbar ist.

Bei einer bevorzugten Ausführungsform der Erfindung ist die Zwangsführung durch eine in der Verschiebebahn des Schwenkarms vorgesehene Kontur- oder Auslenkfläche gebildet, an welcher der Schwenkarm aus der hintergreifenden Schwenkstellung bzw. aus der Kartenbahn ausgelenkt wird. Die Auslenkfläche kann schräg zur Karteneinführrichtung verlaufen und z. B. durch einen in der Verschiebebahn des Schwenkarms vorgesehenen runden Auslenkstift gebildet sein, mit dem der Schwenkarm zusammenwirkt.

Bei einer weiteren bevorzugten Ausführungsform der Erfindung weist der Schwenkarm eine schräg zur Karteneinführrichtung verlaufende Kontur- oder Schrägfläche auf, die mit der Zwangsführung zusammenwirkt.

Besonders bevorzugt ist der Schwenkarm durch den einen Arm eines doppelarmigen Hebels gebildet, dessen anderer Arm mit der Zwangsführung zusammenwirkt.

Bei bevorzugten Ausführungsformen der Erfindung ist ein verstellbares Verriegelungselement vorgesehen, das in seiner Verriegelungsstellung das Herausschwenken des Schwenkarms aus der hintergreifenden Schwenkstellung bzw. aus der Kartenbahn blockiert.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine erste Ausführungsform des erfindungsgemäßen Kartenlesers im Bereich eines eine eingeführte Karte verriegelnd hintergreifenden Schwenkarms in einer seitlichen Schnittansicht;
- Fig. 2: den Kartenleser der Fig. 1 mit nach hinten gezogenem und dabei aus der Kartenbahn herausgeschwenktem Schwenkarm;
- Fig. 3: die verschiebbare Lagerung des in den Fign. 1 und 2 gezeigten Schwenkarms in einem Langloch;
- Fig. 4: eine zweite Ausführungsform des erfindungsgemäßen Kartenlesers im Bereich eines eine eingeführte Karte verriegelnd hintergreifenden Schwenkarms in einer Draufsicht;
- Fig. 5: eine seitliche Schnittansicht des in Fig. 4 gezeigten Kartenlesers mit dem die eingeführte Karte verriegelnd hintergreifenden Schwenkarm; und
- Fig. 6: eine seitliche Schnittansicht des in Fig. 4 gezeigten Kartenlesers mit nach hinten gezogenem und dabei aus der Kartenbahn herausgeschwenktem Schwenkarm.

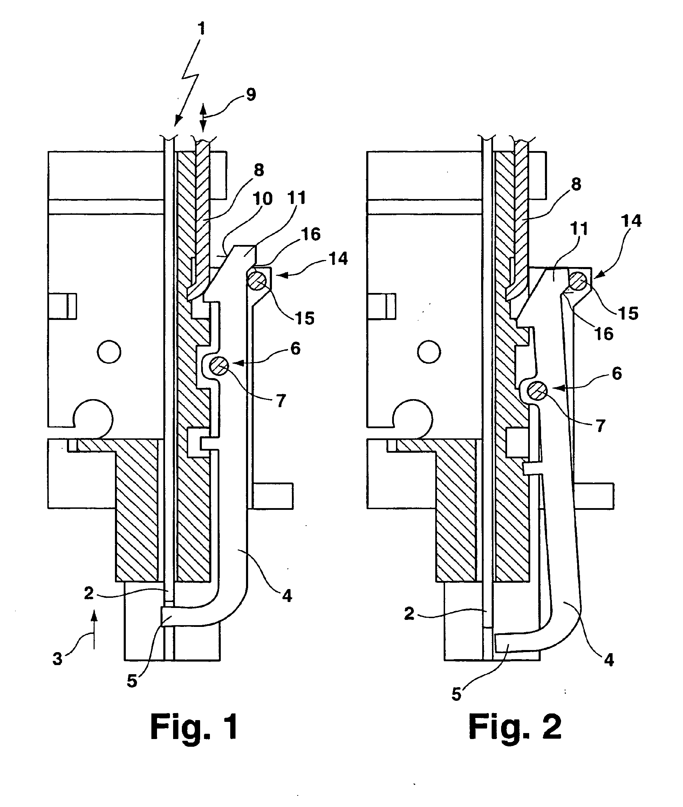

In **Fig. 1** ist mit **1** ein sogenannter Push/Pull-Kartenleser bezeichnet, bei dem eine Karte **2** durch den Benutzer in Einführrichtung **3** bis zur Anlage an einen Kartenanschlag (nicht gezeigt) in ihre Datenaustauschposition in den Kartenleser **1** eingeführt und nach dem Datenaustausch vom Benutzer wieder aus dem Kartenleser **1** herausgezogen wird.

Um - z.B. während des Datenaustausches - ein Zurückziehen der eingeführten Karte durch den Benutzer zu verhindern, wird die eingeführte Karte 2 im Kartenleser 1 mittels eines Schwenkarms **4** verriegelt, der mit seinem krallenförmigen freien Ende **5** hinter der eingeführten Karte 2 in die Kartenbahn eingreift. Der Schwenkarm 4 ist durch den einen Arm eines doppelarmigen Hebels **6** gebildet ist, dessen Schwenkachse **7** als Stift ausgebildet ist. Der Schwenkarm 4 ist mittels einer nicht gezeigten Feder in seine die Kartenbahn freigebende Schwenkstellung vorgespannt und wird durch ein stiftförmiges Verriegelungselement **8** betätigt, das in Einführrichtung 3 vor- und zurückschiebbar ist, wie durch den Doppelpfeil **9** angedeutet ist.

Um den Schwenkarm 4 in seine in die Kartenbahn eingreifende Verriegelungsstellung zu verschwenken, wird das Verriegelungselement 8, wenn die Karte 2 in den Kartenleser 1 eingeführt ist, entgegen der Einführrichtung 3 vorgeschoben, bis es auf eine in seine Bewegungsbahn eingreifende Schrägfläche **10** des anderen Arms **11** des doppelarmigen Hebels 6 aufläuft. Der doppelarmige Hebel 6 wird im Uhrzeigersinn auslenkt, wodurch das freie Ende des Schwenkarms 4 in die Kartenbahn verschwenkt und die eingeführte Karte 2 verriegelt wird. Durch das Verriegelungselement 8 ist das Herausschwenken des Schwenkarms aus der hintergreifenden Schwenkstellung blockiert. Wird das Verriegelungselement 8 in Einführrichtung 3 zurückgezogen, verschwenkt der Schwenkarm 4 aufgrund der Vorspannung in seine die Kartenbahn freigebende Schwenkstellung zurück, und die Karte 2 kann vom Benutzer entnommen werden.

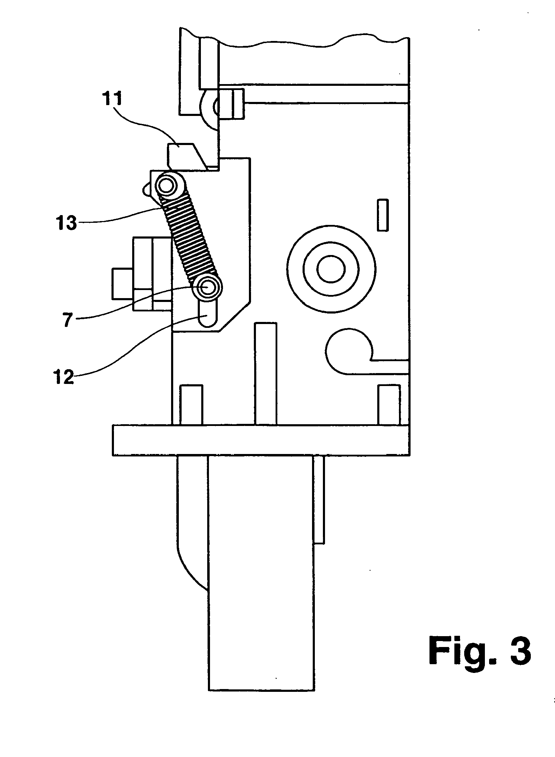

Die Schwenkachse 7 ist in einem sich entgegen der Karteneinführrichtung 3 erstreckenden Langloch **12** (**Fig. 3**) des Kartenlesergehäuses gelagert, so dass der doppelarmige Hebel 6 gegen die Wirkung einer gehäuseseitig abgestützten Rückstellfeder (Zugfeder) **13** entgegen der Karteneinführrichtung 3, d.h. nach hinten, verschiebbar ist. Auf dem Verschiebeweg ist für den Arm 11 eine Zwangsführung **14** vorgesehen, die den Schwenkarm 4 aus der hintergreifenden in die freigebende Schwenkstellung auslenkt. Die Zwangsführung 14 ist durch einen in der Verschiebebahn des Schwenkarms 4 vorgesehenen runden Auslenkstift **15** gebildet, mit dem eine am Arm 11 vorgesehene Schrägfläche **16** zusammenwirkt.

Wenn der Benutzer an der verriegelten Karte 2 zieht, wird der doppelarmige Hebel 6 entgegen der Kraft der Rückstellfeder 13 um die Länge des Langlochs 12 (z.B. um 2,5 mm) nach hinten gezogen. Der Arm 11 des doppelarmigen Hebels 6 wird dadurch frei vom Verriegelungselement 8 und läuft mit seiner Schrägfläche 16 gegen den Auslenkstift 15. Bei der weiteren Zugbewegung wird der Arm 11 entgegen dem Uhrzeigersinn ausgelenkt, so dass der Schwenkarm 4 die Kartenbahn freigibt und die eingeführte Karte 2 entnommen werden kann (**Fig. 2**).

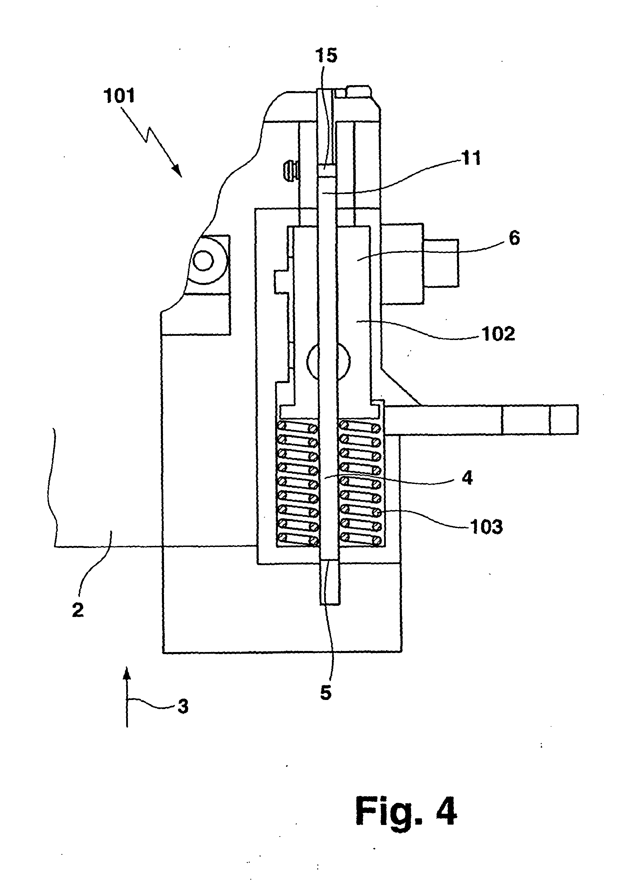

Vom Kartenleser 1 unterscheidet sich der in **Fig. 4** gezeigte Kartenleser **101** allein dadurch, dass der doppelarmige Hebel 6 in einem Lagerelement **102** drehbar gelagert ist, welches im Kartenlesergehäuse gegen die Wirkung von zwei gehäuseseitig abgestützten Rückstellfedern (Druckfedern) **103** entgegen der Karteneinführrichtung 3, d.h. nach hinten, verschiebbar ist. Dazu sind im Kartenlesergehäuse seitliche Führungsnuten (nicht gezeigt) vorgesehen, in denen seitlich vorstehende Zapfen (nicht gezeigt) des Lagerelements 102 geführt sind. Die Drehachse 7 des doppelarmigen Hebels 6 ist als Stift ausgebildet, der in den Lagerelement 102 eingesteckt ist.

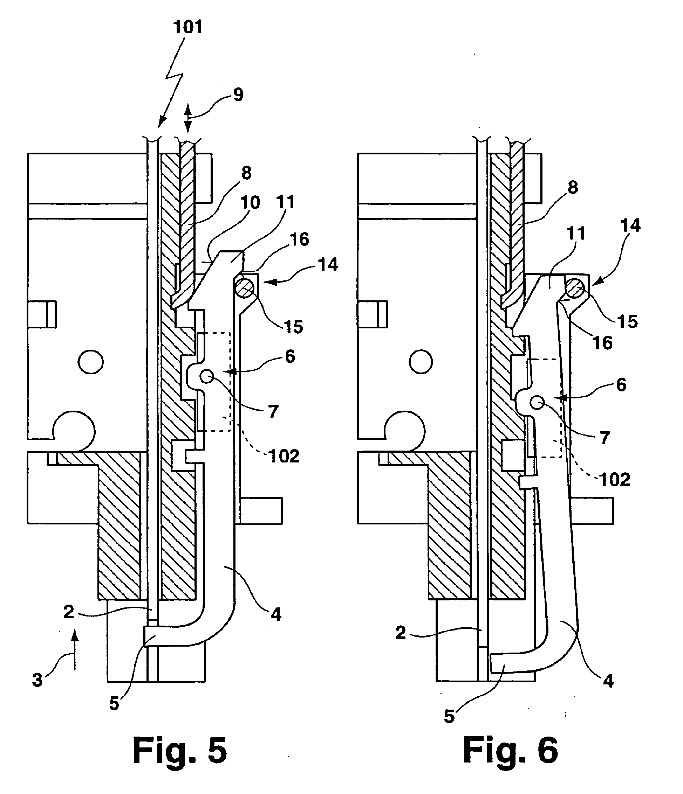

Wenn der Benutzer an der verriegelten Karte 2 (**Fig. 5**) und damit am doppelarmigen Hebel 6 zieht, wird das Lagerelement 102 entgegen der Kraft der Rückstellfedern 103 um z.B. 2,5 mm nach hinten gezogen. Der Arm 11 des doppelarmigen Hebels 6 wird dadurch frei vom Verriegelungselement 8 und läuft mit seiner Schrägfläche 16 gegen den Auslenkstift 15. Bei der weiteren Zugbewegung wird der Arm 11 entgegen dem Uhrzeigersinn ausgelenkt, so dass der Schwenkarm 4 die Kartenbahn freigibt und die eingeführte Karte 2 entnommen werden kann (**Fig. 6**).

## Patentansprüche

1. Kartenleser (1; 101) mit einem Schwenkarm (4) zur Verriegelung einer eingeführten Karte (2) entgegen der Karteneinführrichtung (3), wobei der Schwenkarm (4) in seiner Verriegelungsstellung hinter dem in Karteneinführrichtung (3) hinteren. Kartenende in die Kartenbahn eingreift,
**dadurch gekennzeichnet,**
**dass** der Schwenkarm (4) entgegen der Karteneinführrichtung (3) gegen die Wirkung einer Rückstellfeder (13; 103) verschiebbar ist und auf seinem Verschiebeweg eine Zwangsführung (14) vorgesehen ist, die den Schwenkarm (4) aus der Kartenbahn auslenkt.

2. Kartenleser nach Anspruch 1, **dadurch gekennzeichnet, dass** die Schwenkachse (7) des Schwenkarms (4) in einem Langloch (12) verschiebbar gelagert ist.

3. Kartenleser nach Anspruch 1, **dadurch gekennzeichnet, dass** die Schwenkachse (7) des Schwenkarms (4) in einem Lagerelement (120) drehbar gelagert ist, welches im Kartenleser (101) entgegen der Karteneinführrichtung (3) verschiebbar ist.

4. Kartenleser nach einem der vorhergehenden Ansprüche, **dadurch gekennzeichnet, dass** die Zwangsführung (14) durch eine in der Verschiebebahn des Schwenkarms (4) vorgesehene Auslenkfläche gebildet ist, an welcher der Schwenkarm (4) aus der Kartenbahn ausgelenkt wird.

5. Kartenleser nach Anspruch 4, **dadurch gekennzeichnet, dass** die Auslenkfläche schräg zur Karteneinführrichtung (3) verläuft.

6. Kartenleser nach einem der vorhergehenden Ansprüche, **dadurch gekennzeichnet, dass** der Schwenkarm (4) eine schräg zur Karteneinführrichtung (3) verlaufende Schrägfläche (16) aufweist, die mit der Zwangsführung (14) zusammenwirkt.

7. Kartenleser nach einem der vorhergehenden Ansprüche, **dadurch gekennzeichnet, dass** der Schwenkarm (4) durch den einen Arm eines doppelarmigen Hebels (6) gebildet ist, dessen anderer Arm (11) mit der Zwangsführung (14) zusammenwirkt.

8. Kartenleser nach einem der vorhergehenden Ansprüche, **gekennzeichnet durch** ein verstellbares Verriegelungselement (8), **durch** das in seiner Verriegelungsstellung das Herausschwenken des Schwenkarms (4) aus der Kartenbahn blockiert ist.

## Claims

1. Card reader (1; 101) comprising a pivot arm (4) for locking an inserted card (2) in a direction opposite to the card insertion direction (3), wherein the pivot arm (4) engages the card path, when it is disposed in its locking position behind the rear card end, as viewed in the card insertion direction (3), **characterized in that** the pivot arm (4) can be displaced opposite to the card insertion direction (3) against the action of a restoring spring (13; 103), with a forced guidance (14) being provided on its displacement path which deflects the pivot arm (4) out of the card path.

2. Card reader according to claim 1, **characterized in that** the pivot axis (7) of the pivot arm (4) is disposed in an elongated hole (12) such that it can be displaced.

3. Card reader according to claim 1, **characterized in that** the pivot axis (7) of the pivot arm (4) is rotatably disposed in a bearing element (120) which can be displaced in the card reader (101) opposite to the card insertion direction (3).

4. Card reader according to any one of the preceding claims, **characterized in that** the forced guidance (14) is formed by a deflecting surface provided in the displacement path of the pivot arm (4) on which the pivot arm (4) is deflected out of the card path.

5. Card reader according to claim 4, **characterized in that** the deflecting surface extends at an angle to the card insertion direction (3).

6. Card reader according to any one of the preceding claims, **characterized in that** the pivot arm (4) comprises an inclined surface (16) which extends at an angle to the card insertion direction (3) and cooperates with the forced guidance (14).

7. Card reader according to any one of the preceding claims, **characterized in that** the pivot arm (4) is formed by one arm of a two-armed lever (6) whose other arm (11) cooperates with the forced guidance (14).

8. Card reader according to any one of the preceding claims, **characterized by** an adjustable locking element (8) which blocks a pivoting motion of the pivot arm (4) out of the card path when it is disposed in its locking position.

## Revendications

1. Lecteur de cartes (1 ; 101) avec un bras pivotant (4) pour verrouiller une carte (2) introduite en sens inverse du sens d'introduction de la carte (3), le bras pivotant (4) s'engageant, dans sa position de verrouillage, dans le parcours de la carte derrière l'extrémité arrière de la carte dans le sens d'introduction de la carte (3),
**caractérisé par le fait**
**que** le bras pivotant (4) est déplaçable en sens inverse du sens d'introduction de la carte (3) contre l'action d'un ressort de rappel (13 ; 103) et qu'il est prévu dans sa course de déplacement un guidage forcé (14) qui dévie le bras pivotant (4) du parcours de la carte.

2. Lecteur de cartes selon la revendication 1, **caractérisé par le fait que** l'axe de pivotement (7) du bras pivotant (4) est monté déplaçable dans un trou oblong (12).

3. Lecteur de cartes selon la revendication 1, **caractérisé par le fait que** l'axe de pivotement (7) du bras pivotant (4) est monté pivotant dans un élément de support (102) qui est déplaçable en sens inverse du sens d'introduction de la carte (3) dans le lecteur de cartes (101).

4. Lecteur de cartes selon l'une des revendications précédentes, **caractérisé par le fait que** le guidage forcé (14) est formé par une surface de déviation prévue dans le parcours de déplacement du bras pivotant (4), sur laquelle le bras pivotant (4) est dévié du parcours de la carte.

5. Lecteur de cartes selon la revendication 4, **caractérisé par le fait que** la surface de déviation s'étend obliquement par rapport au sens d'introduction de la carte (3).

6. Lecteur de cartes selon l'une des revendications précédentes, **caractérisé par le fait que** le bras pivotant (4) présente une surface oblique (16) s'étendant obliquement par rapport au sens d'introduction de la carte (3) qui coopère avec le guidage forcé (14).

7. Lecteur de cartes selon l'une des revendications précédentes, **caractérisé par le fait que** le bras pivotant (4) est formé par un des bras d'un levier à deux bras (6) dont l'autre bras (11) coopère avec le guidage forcé (14).

8. Lecteur de cartes selon l'une des revendications précédentes, **caractérisé par** un élément de verrouillage (8) réglable par lequel, dans sa position de verrouillage, l'écartement par pivotement du bras pivotant (4) du parcours de la carte est bloqué.
